# EUROPÄISCHE PATENTANMELDUNG

(11) **EP 2 612 723 A1**
(43) Veröffentlichungstag der Anmeldung: **10.07.2013**
(21) Anmeldenummer: 12150161.3
(22) Anmeldetag: 04.01.2012
(51) Int. Cl.: B23K 33/00, B23K 9/02, B23K 9/028, B23K 31/12

(54) **Schräg verlaufende Schweißnaht und Messverfahren**

(71) Anmelder: Siemens Aktiengesellschaft, 80333 München (DE)
(72) Erfinder: Borgmann, Christian, 46284 Dorsten (DE); Clossen-von Lanken Schulz, Michael, 47661 Issum (DE); Gunzelmann, Karl-Heinz, 90491 Nürnberg (DE); Kompalka, Andreas, 58453 Witten (DE); Schreiber, Tim, 44807 Bochum (DE)

(57) **Zusammenfassung**

Durch die Gestaltung einer schräg verlaufenden Schweißnaht (7) in einem Bauteil (1) kann die Schweißnaht (7) zur besseren Qualitätskontrolle besser sequentiell und vollständig untersucht werden.

## Beschreibung

Die Erfindung betrifft eine schräg verlaufende Schweißnaht und ein verbessertes Prüfverfahren.

Einzelne Komponenten werden oft durch Schweißverbindungen miteinander verbunden. Auch Schweißverbindungen können Fehler aufweisen, die bei ungünstiger Lage wachsen können.

Jede Schweißverbindung könnte prinzipiell Fehler aufweisen, die im Rahmen der Qualitätsprüfung untersucht werden sollen.

Es besteht auch oft das Problem die Schweißnaht sequentiell zu untersuchen.

Es ist daher Aufgabe der Erfindung oben genannte Probleme zu lösen.

Die Aufgabe wird gelöst durch eine Schweißnaht nach Anspruch 1 und ein Verfahren nach Anspruch 5.

In den Unteransprüchen sind weitere vorteilhafte Maßnahmen aufgelistet, die beliebig miteinander kombiniert werden können, um weitere Vorteile zu erzielen.

Durch das Kippen der Schweißnahtlängsachse ist es möglich, die Orientierung der Schweißnahtfehler in Bezug auf das Hauptachsensystem des Bauteils zu drehen. Damit ist es möglich, die Beanspruchung der Fehlstellen durch mechanische Spannungen zu verringern und auch für größere Fehlstellen die Integrität des geschweißten Bauteils zu gewährleisten.

Durch die Optimierung des Winkels der Schweißnahtlängsachse wird die Beanspruchung von Fehlstellen durch mechanische Spannungen reduziert.

Durch das Kippen der Schweißnahtlängsachse ändert sich auch die Orientierung der Fehlstellen zum Hauptachsensystem. Durch das Kippen werden die auf die Flankenbindefehler wirkenden Axialspannungen reduziert. Durch dieses Vorgehen können größere Flankenbindefehler toleriert oder bei gleichbleibender Größe der Flankenbindefehler die Einsatzgrenzen erweitert werden.

Somit kann die Bauteilintegrität über einen längeren Zeitraum gewährleistet werden. Bei einem rotationssymmetrischen Bauteil (z.B. Turbinenläufer) kann die Startzahl erhöht werden.

Es zeigen:
- Figur 1: eine Schweißnaht nach dem Stand der Technik,
- Figur 2, 3: Ausführungsbeispiel der Erfindung,
- Figur 4: schematisch den Ablauf des Messverfahrens.

Die Beschreibung der Figuren stellen nur Ausführungsbeispiele der Erfindung dar.

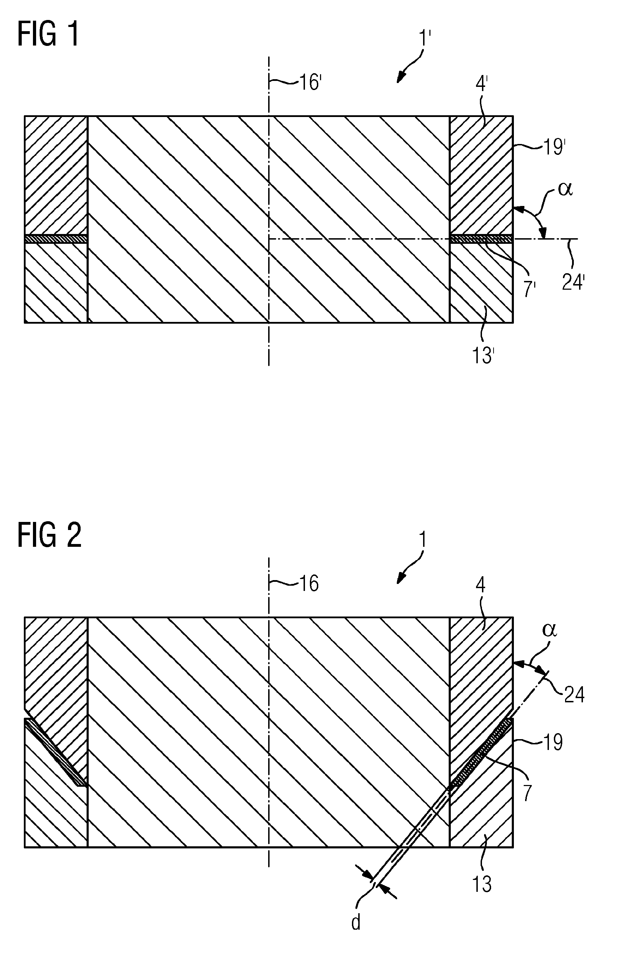

In Figur 1 ist ein Bauteil 1', insbesondere ein Gehäuseteil gezeigt, das aus zwei strukturellen Komponenten 4', 13' (d.h. großen massiven Elementen) zusammengefügt ist.

Eine Schweißnaht 7' verläuft hier senkrecht (α = 90°) zu einer Längsrichtung 16, insbesondere Drehachse 16' des Bauteils 1 bzw. senkrecht zur äußeren Oberfläche 19'.

Eine solche Schweißnaht 7' lässt sich nur schlecht sequentiell untersuchen, weil durch einen Sensor mit seinem Winkelbereich für seine Signale sehr große Anteile der Schweißnaht 7' erfasst werden und somit eine integrale Fehlerfassung erfolgt, die keinerlei Beurteilung über Größe und Lage (Tiefe) der Defekte ermöglicht.

Figur 2 zeigt eine erfindungsgemäße Schweißnaht 7.

Die Schweißnaht 7 mit ihrer Schweißnahtlängsachse 24 verläuft unter einem von deutlich von 90° verschiedenen spitzen Winkel α zur Längsachse 16 des Bauteils 1 oder zur Oberfläche 19 gesehen.

Der Winkel α liegt zwischen 10° und 80°, insbesondere zwischen 20° und 70°. Besonders optional ist α = 45°.

Solche Schweißverbindungen können durch Engspaltschweißverfahren erzeugt werden.

Eine solche Schweißnaht 7 (Fig. 2) ist deutlich länger als eine Schweißnaht 7' (Fig. 1) nach dem Stand der Technik.

Die Schweißnaht 7 wird möglichst dünn ausgeführt und weist vorzugsweise quer zur Schweißnahtlängsrichtung 24 eine konstante Dicke d auf.

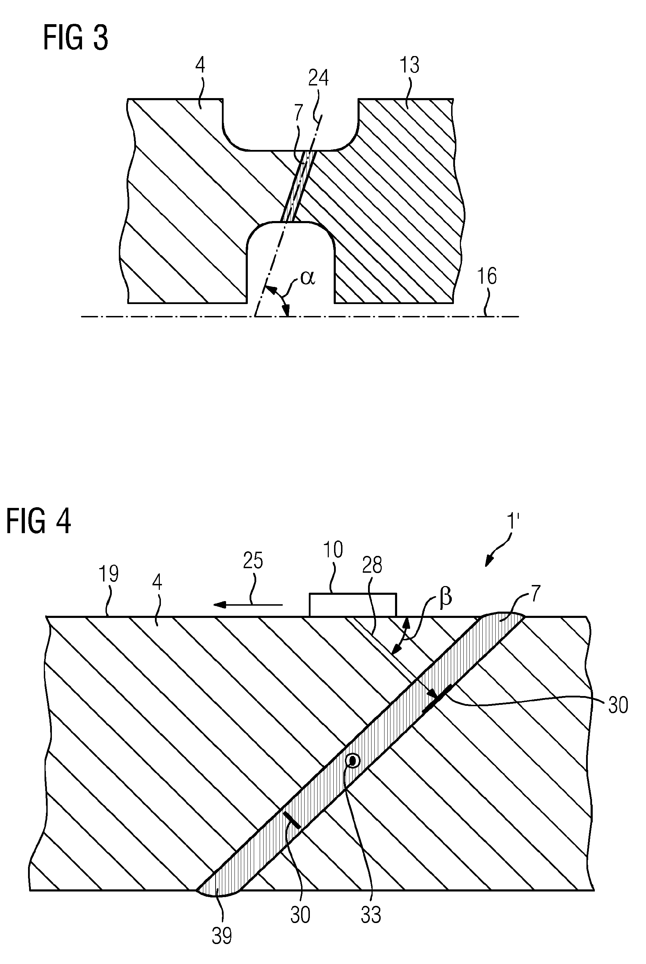

Figur 3 zeigt zwei Bauteile 4, 13, die sich um eine Rotationsachse 16 drehen. Die Schweißnahtlängsachse 24 der Schweißnaht 7 verläuft nicht senkrecht zur Rotationsachse.

Durch die Verkippung wird das bruchmechanische Verhalten deutlich verbessert.

Figur 4 zeigt, wie eine schräg verlaufende Schweißnaht 7 besser von der äußeren Oberfläche 19 aus untersucht werden kann. Ein Sensor 10, insbesondere ein Ultraschallsensor, kann in einer Verfahrrichtung 25 über die Oberfläche 19 verfahren werden und dabei sequentiell, ohne den Einstrahlwinkel β (=90- α) zu verändern, die Schweißnaht 7 vollständig untersuchen. Dies ist insbesondere daher sinnvoll, da Ultraschallwellen mit ihrer Schallrichtung 28 selten gerichtet ausgestrahlt werden können.

Vorzugsweise wird bei der Bewegung des Sensors 10 von der Schweißnaht 7 weg die Leistung erhöht, um eine gleichbleibende Messqualität zu erzielen.

Somit können eventuell vorhandene Fehler wie Flankenbindedefekte 30, Querfehler 33, Lagebindedefekte 36, Schweißnahtwurzelbereiche 39 einzeln detektiert werden.

## Patentansprüche

1. Bauteil (1) aus zwei strukturellen Komponenten (4, 13), insbesondere ein rotationssymmetrisches Bauteil (1),
das (1) eine Drehachse (16) aufweist,
wobei eine Schweißnaht (7) die Komponenten (4, 13) miteinander verbindet und
wobei die Schweißnaht (7) unter einem deutlich von 90° verschiedenen spitzen Winkel (α) zur Längsachse (16) verläuft, insbesondere bei dem der Winkel (α) zwischen 10° und 80°, ganz insbesondere zwischen 20° und 70° beträgt.

2. Bauteil nach Anspruch 1,
bei dem die Schweißnaht (7) in einem Winkel (α) von 45° zur Längsachse (16) verläuft.

3. Bauteil nach einem oder beiden der Ansprüche 1 oder 2, bei dem die Schweißnaht (7) möglichst dünn ist und
quer zu ihrer Schweißnahtlängsachse (24) eine konstante Dicke (d) oder Querschnitt aufweist.

4. Bauteil nach einem oder mehreren der vorherigen Ansprüche,
bei dem die Schweißnaht (7) durch zusätzliches Schweißmaterial gebildet wird.

5. Verfahren zur Untersuchung einer schräg verlaufenden Schweißnaht (7),
bei dem ein Sensor (10),
insbesondere ein Ultraschallsensor,
von der Schweißnaht (7) weg bewegt wird,
so dass die Schweißnaht (7) sequentiell und vollständig untersucht werden kann.

6. Verfahren nach Anspruch 5,
bei dem die Leistung des Sensors (10) erhöht wird,
wenn er (10) von der Schweißnaht (7) weg verfahren wird.

7. Verfahren nach einem oder beiden der Ansprüche 5 oder 6, bei dem der Winkel zwischen einer Senkrechten auf der Schweißnaht (7) und dem Sensor (10) β = 90-α beträgt.
